Europäisches Patentamt

European Patent Office

Office européen des brevets

(19)

(11) **EP 1 185 065 A2**

(12) # DEMANDE DE BREVET EUROPEEN

(43) Date de publication:
**06.03.2002 Bulletin 2002/10**

(51) Int Cl.⁷: **H04M 3/523**

(21) Numéro de dépôt: **01402145.5**

(22) Date de dépôt: **08.08.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.08.2000 FR 0011005**

(71) Demandeur: **FRANCE TELECOM**
**75015 Paris (FR)**

(72) Inventeurs:
• **Berrondo, M. Vincent**
**38000 Grenoble (FR)**
• **Stern, M. Daniel**
**75011 Paris (FR)**
• **Chemouil, M. Prosper**
**91240 Saint-Michel Sur Orge (FR)**

(74) Mandataire: **Lapoux, Roland M.**
**Cabinet Martinet & Lapoux, 43 Boulevard Vauban, B.P. 405, Guyancourt**
**78055 Saint Quentin Yvelines Cedex (FR)**

(54) **Répartition prédictive d'appels entre des centres de renseignement**

(57) La répartition des appels vers des centres de renseignement téléphoniques (CR, CRL) est concentrée dans un serveur (SRA) ce qui réduit le trafic entre les centres. Cycliquement pour un centre donné (CRL), le serveur détermine une attente prévisionnelle des appels en fonction d'une attente moyenne par appel qu'il estime pour le centre donné, et compare l'attente prévisionnelle à deux seuils afin de décider de router les appels vers le centre donné ou vers un autre centre de renseignement (CR) moins chargé, et à deux autres seuils pour que le centre donné accepte des appels d'autres centres plus chargés, ou les refuse si lui-même est saturé.

FIG.1

**Description**

La présente invention concerne l'attente d'appels téléphoniques dans des centres de renseignement, dits également centres d'appel ou centres de réponse à des appels téléphoniques, et plus particulièrement une répartition d'appels vers des centres de renseignement téléphoniques en dépendance de l'attente des appels dans ceux-ci.

Le brevet US-5 506 898 présente un procédé d'estimation d'une attente dans un centre de renseignement ayant plusieurs files d'attente d'appel en fonction de priorités, afin de signaler par messagerie vocale à chaque demandeur d'un appel, l'attente effective pour obtenir un opérateur du centre.

Si Q appels sont déjà présents dans la file d'attente, et si le centre de renseignement traite en moyenne un appel toutes les S secondes, l'attente prévisionnelle AP est définie par AP = QxS. L'attente prévisionnelle AP est ainsi le temps qu'il faudrait à un appel pour aller de la dernière place, en l'occurrence la Qième place, à la première place de la file.

La durée de service perçue par l'utilisateur est définie comme le taux moyen de progression dans la file d'attente, c'est-à-dire le temps qu'il faut à un appel pour progresser d'une place à la suivante dans la file. La durée de service perçue par l'utilisateur est alors mise à jour à chaque décrochage d'un opérateur dans le centre de renseignement, c'est-à-dire à chaque réponse à un appel courant par le temps qu'a attendu l'appel courant divisé par le nombre d'appels en attente dans la file au moment où l'appel courant a été parqué dans la file. La durée de service $S_n$ perçue par l'utilisateur est déduite de la relation suivante selon le brevet US-5 506 898 :

$$S_n = \beta \times S_{n-1} + (1 - \beta) \times TAF.$$

$S_{n-1}$ désigne la durée de service perçue par l'utilisateur pour le dernier appel précédant l'appel courant, et TAF désigne le taux de progression moyen dans la file pour le dernier appel. $\beta$ est un facteur, typiquement de 0,95, correspondant à une pondération très forte des irrégularités de la durée de service perçue par l'utilisateur.

La réactivité au changement du nombre d'opérateurs dans le centre de renseignement est immédiate selon le brevet US-5 506 898 puisque les effectifs affectés à chaque groupe de files d'attente sont connus. Par conséquent, les variations des nombres d'opérateurs sont répercutées instantanément sur la durée de service $S_n$ perçue par l'utilisateur en appliquant le facteur multiplicatif

$$\rho = \text{(nouvel effectif) / (ancien effectif)}.$$

La demande de brevet EP-0 772 335 décrit une répartition des appels dans un système comprenant plusieurs centres de renseignement indépendants les uns des autres. Chaque appel est associé à un centre de renseignement local qui doit traiter l'appel en priorité. Si le centre de renseignement local est saturé, des appels qui lui sont associés peuvent être dirigés vers un autre centre de renseignement distant moins chargé.

L'estimation de la charge repose sur l'attente prévisionnelle AP décrit dans le brevet américain précité.

Pour chaque appel arrivant, tous les centres de renseignement qui offrent des mêmes compétences sont susceptibles d'être interrogés, via le réseau téléphonique, afin de comparer leurs attentes prévisionnelles et déterminer la meilleure file d'attente pour l'appel, c'est-à-dire la file où l'attente est la plus courte.

La priorité du centre de renseignement local par rapport aux autres centres de renseignement interrogés est accentuée en ajoutant un quantum de temps (constant) aux attentes prévisionnelles des centres distants par rapport à l'attente prévisionnelle du centre local, pour la détermination de la meilleure file.

Toutefois, en cas de forte charge du réseau tout entier, le quantum de temps ne suffit plus, et les appels ne sont plus traités par leurs centres de renseignement locaux sans que le service en soit amélioré.

La répartition d'appel selon la demande de brevet européen précitée impose un dialogue entre les centres qui s'interrogent les uns les autres pour connaître leurs attentes prévisionnelles, en raison de l'absence d'un moyen de traitement centralisé entre les centres de renseignement. Ces interrogations ont lieu à chaque appel, ou périodiquement, afin de réduire le trafic de service entre les centres de renseignement généré par ces interrogations, et génèrent ainsi un trafic supplémentaire entre les centres.

L'absence de centralisation pose aussi des problèmes d'administration du système des centres de renseignement et, de manière générale, présente les inconvénients des solutions non centralisées telles que duplication des données, administration difficile et évolution difficile des logiciels de gestion des centres.

L'objectif principal de l'invention est de remédier aux inconvénients des procédés selon la technique antérieure évoquée ci-dessus, et ainsi de concentrer la gestion des appels des centres de renseignement et réduire tout trafic supplémentaire entre les centres de renseignement.

A cette fin, un procédé pour répartir des appels vers des centres de renseignement téléphoniques, est caractérisé par un cycle d'étapes suivantes pour un centre de renseignement donné :

- déterminer une attente prévisionnelle des appels en fonction du nombre d'appels en attente et d'une attente moyenne estimée par appel dans le centre donné,

- router les appels vers le centre donné lorsque l'attente prévisionnelle déterminée est inférieure au premier seuil, et accepter des appels d'autres centres de renseignement dont les attentes prévisionnelles sont supérieures au premier seuil, lorsque l'attente prévisionnelle déterminée est inférieure à un troisième seuil,

- router les appels destinés au centre donné vers un autre centre de renseignement à condition que l'attente prévisionnelle de celui-ci soit inférieure au troisième seuil, lorsque l'attente prévisionnelle déterminée est comprise entre le premier seuil et un deuxième seuil supérieur au premier seuil, et n'accepter des appels d'un autre centre de renseignement que si l'attente prévisionnelle de celui-ci est supérieure au deuxième seuil, lorsque l'attente prévisionnelle déterminée est comprise entre le troisième seuil et un quatrième seuil supérieur au troisième seuil, et

- router des appels destinés au centre donné vers un autre centre de renseignement dont l'attente prévisionnelle est inférieure au quatrième seuil, lorsque l'attente prévisionnelle déterminée est supérieure au deuxième seuil, et refuser tout appel d'autres centres de renseignement lorsque l'attente prévisionnelle déterminée est supérieure au quatrième seuil.

Cette dernière étape de router et refuser garantit que le centre de renseignement donné, lorsqu'il est saturé, ne reçoit plus de trafic d'autres centres et assure ainsi la stabilité de l'ensemble des centres.

En pratique, chaque centre de renseignement vers lequel des appels du centre donné sont routés, est sélectionné dans une liste prédéterminée de centres de renseignement attribuée au centre donné. Lorsque ledit chaque centre de renseignement a une attente prévisionnelle inférieure au troisième seuil, celui-ci est trouvé parmi les centres de renseignement disponibles en parcourant cycliquement ladite liste prédéterminée. Selon une autre variante, lorsque ledit chaque centre de renseignement a une attente prévisionnelle inférieure au quatrième seuil, celui-ci présente la plus petite attente prévisionnelle de la liste.

Le procédé est plus simple lorsque les premier et troisième seuils sont égaux, et les deuxième et quatrième seuils sont égaux.

Afin d'assurer une meilleure stabilité de fonctionnement à l'ensemble des centres de renseignement, ceux-ci ne changent pas instantanément d'état au franchissement de l'un des quatre seuils par l'attente prévisionnelle. A cet égard, le franchissement de chaque seuil selon un sens donné par l'attente prévisionnelle déterminée au cours du cycle incrémente un compte, et l'étape de router ou d'accepter ou de refuser dépendant de ce seuil n'est exécutée que dès que le compte atteint un nombre prédéterminé pendant des cycles précédant ledit cycle.

L'invention résout également un autre problème posé par l'objectif principal, à cause de la méconnaissance du nombre d'opérateurs présents dans chaque centre et donc de l'attente moyenne dans chaque centre, par tout système de concentration de la gestion des centres situé à l'extérieur des centres eux-mêmes.

Selon l'invention, l'attente prévisionnelle des appels est égale au produit $(Np+1)S_k^*$. Np dénote le nombre d'appels mis en attente dans le centre de renseignement donné qui est incrémenté d'une unité en réponse à chaque appel dirigé vers le centre donné et qui est décrémenté en réponse à un décrochage pour cet appel dans le centre donné. $S_k^*$ dénote une attente moyenne estimée entre deux décrochages dans le centre donné.

L'attente moyenne est estimée dans l'ignorance du nombre d'opérateurs dans le centre donné. Elle est selon l'invention rafraîchie en réponse au décrochage pour chaque appel dit significatif qui a déjà attendu en file d'attente dans le centre donné selon la relation suivante :

$$S_k^* = \alpha\, S_{k-1}^* + (1-\alpha)\Delta td.$$

$S_{k-1}^*$ dénote l'attente moyenne estimée pour un appel significatif précédant, $\alpha$ un facteur de lissage, et $\Delta td$ une différence entre l'instant du décrochage pour l'appel significatif et l'instant du décrochage de l'appel précédent, qu'il ait été mis en attente ou non.

Le facteur de lissage est de préférence déterminé en fonction du nombre d'appels significatifs NAS par période prédéterminée, selon la formule :

$$\alpha = NAS\sqrt{0,1}$$

L'invention concerne également un système de gestion des appels vers des centres de renseignement téléphoniques. Il est caractérisé en ce qu'il comprend un serveur qui est relié à des moyens de commutation téléphonique desservant les centres de renseignement pour recevoir de ceux-ci des signaux de traitement d'appels, et qui concentre la gestion du routage des appels vers les centres conformément au procédé selon l'invention. Cette concentration supprime des échanges de données entre les centres de renseignement et assure un meilleur contrôle à l'exploitant de l'ensemble des centres de renseignement. Par exemple, le procédé de l'invention peut n'être mis en oeuvre que pendant des heures de trafic élevé.

D'autres caractéristiques et avantages de la présente invention apparaîtront plus clairement à la lecture de la description suivante de plusieurs réalisations préférées de l'invention en référence aux dessins annexés correspondants dans lesquels :

- la figure 1 est un bloc-diagramme d'un système de centre de renseignement comprenant un serveur de répartition d'appels pour la mise en oeuvre du procédé selon l'invention ;
- la figure 2 est un algorithme de répartition d'appel relatif à un centre de renseignement, implémenté dans le serveur de répartition d'appels ;
- la figure 3 est une autre réalisation d'une partie de l'algorithme de répartition d'appels de la figure 2 pour un filtrage par hystérésis du changement d'attente prévisionnelle ;
- la figure 4 est un algorithme prédictif de la moyenne d'attente estimée selon l'invention ; et
- la figure 5 est un graphe pour déterminer un facteur de lissage de l'attente moyenne estimée.

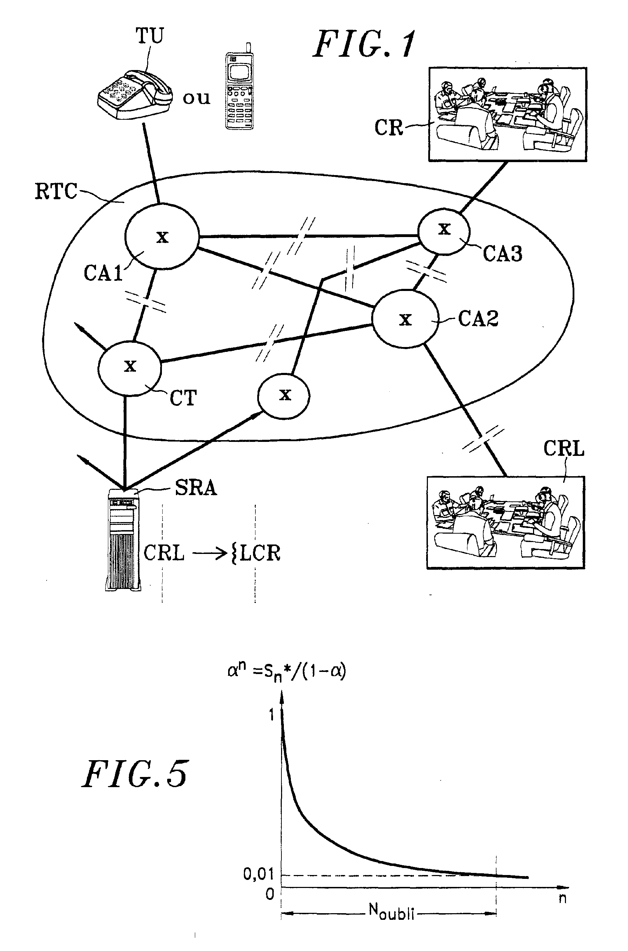

Comme montré schématiquement à la figure 1, dans le réseau téléphonique commuté RTC, un terminal d'usager téléphonique TU est rattaché à un autocommutateur à autonomie d'acheminement CA1.

Dans une architecture de réseau intelligent, chaque autocommutateur téléphonique est associé à un commutateur d'accès au service (Service Switching Point SSP) qui gère l'accès à des services prédéterminés pour les terminaux d'usager qu'il dessert. En particulier, dans le cadre de l'invention, l'autocommutateur CA1 est relié à un serveur de répartition d'appels SRA jouant le rôle de point de commande de service (Service Control Point SCP) dans le réseau intelligent à travers un centre de transit CT desservant plusieurs autocommutateurs et jouant ici le rôle du commutateur d'accès au service SSP.

Dans la figure 1 est également représenté un centre de renseignement téléphonique local CRL, qui traite des appels de renseignement provenant des terminaux d'usager rattachés notamment à l'autocommutateur CA1, tel que le terminal TU, et qui est desservi par plusieurs lignes, par exemple des canaux de données B d'un accès primaire RNIS, par un deuxième autocommutateur CA2. Un autre centre de renseignement téléphonique CR relié à un autocommutateur CA3 est également montré à la figure 1, bien qu'en pratique, de nombreux autres centres de renseignement soient reliés au réseau RTC.

De manière plus générale, le serveur de répartition d'appels SRA gère le routage des appels de renseignement pour tout un territoire, tel que la France, et dessert plusieurs centres de transit qui eux-mêmes sont reliés chacun à plusieurs autocommutateurs téléphoniques.

L'architecture de réseau intelligent permet une concentration de la gestion du routage des appels vers tous les centres de renseignement CR dans le serveur SRA sans nécessiter des interrogations entre les centres de renseignement CR. Pour la mise en oeuvre de l'invention, un appel téléphonique de renseignement résulte de la composition du numéro d'appel traditionnel 12 depuis n'importe quel terminal téléphonique fixe TU et de l'acheminement de l'appel par l'autocommutateur de rattachement CA1 vers le serveur de répartition d'appels SRA.

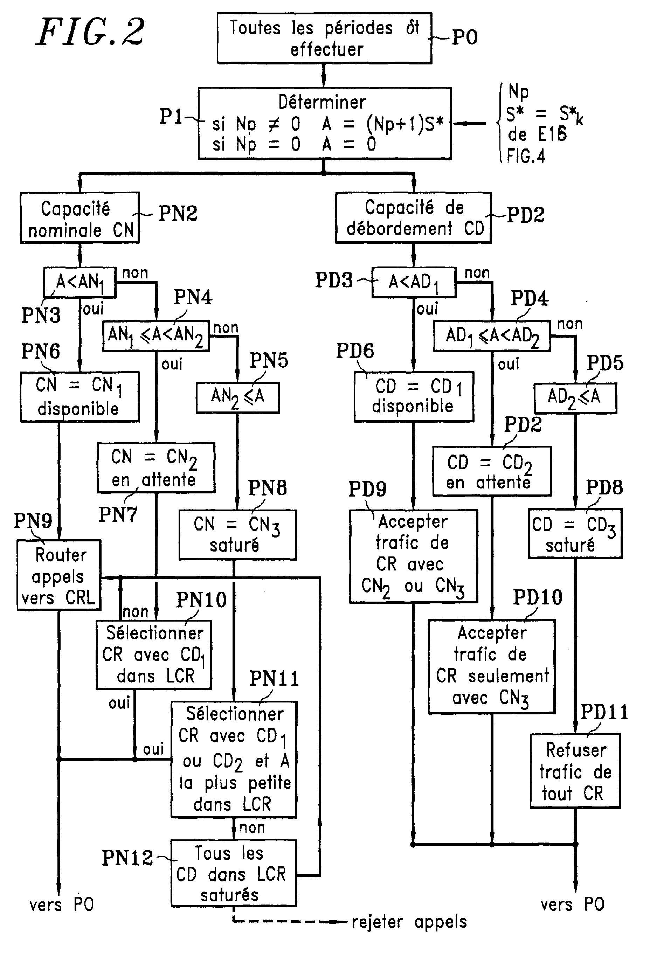

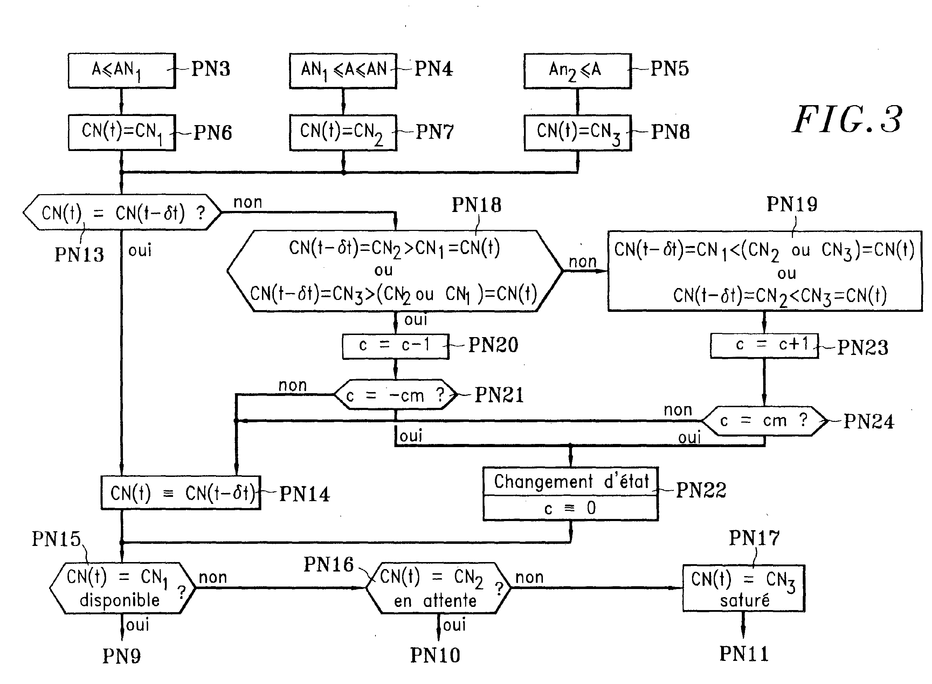

A chaque terminal d'usager TU d'une zone géographique prédéterminée, par exemple tous les terminaux rattachés à l'autocommutateur CA1, le serveur SRA attribue un centre de renseignement "local", désigné par CRL pour le terminal illustré TU dans la suite de la description. A chaque centre de renseignement CRL, le serveur SRA associe une liste de centres de renseignement LCR vers l'un desquels l'appel de renseignement depuis le terminal TU pourra être dirigé lorsque le centre de renseignement local CRL est dans un état d'attente ou dans un état saturé, comme on le verra dans la suite. Un appel de renseignement émis par un terminal d'usager TU est ainsi traité par le serveur de répartition d'appels SRA qui décide en fonction de l'algorithme cyclique décrit ci-après en référence à la figure 2, de diriger l'appel vers le centre de renseignement local CRL auquel est rattaché le terminal TU, ou bien vers l'un des centres de renseignement énoncés dans la liste LCR associée au centre de renseignement CRL.

Pour gérer la répartition des appels, le serveur SRA dispose d'une copie des signaux de traitement d'appels de tous les centres de renseignement CR, et connaît en particulier tous les instants de décrochage des opérateurs téléphoniques dans chaque centre de renseignement afin de déterminer une attente prévisionnelle A pour chaque centre de renseignement, sans échange de données de service entre les centres de renseignement.

Typiquement, le serveur SRA gère le routage d'appels de renseignement vers une trentaine de centres de renseignement CR dans lesquels sont répartis 4500 opérateurs téléphoniques environ.

La figure 2 concerne la répartition des appels de renseignement provenant de terminaux d'usager rattachés aux centres de renseignement local CRL, tout en sachant que le serveur SRA gère en parallèle de la même façon des appels de renseignement provenant d'autres terminaux rattachés aux autres centres de renseignement.

Comme indiqué au début de l'algorithme cyclique, à une étape initiale P0, le cycle des étapes suivantes est effectué à chaque période $\delta t$, afin de déterminer les états du centre de renseignement CRL et de prendre la décision du routage des appels vers ce centre de renseignement ou vers l'un des centres de renseignement de la liste LCR associée à celui-ci, pendant toute la période $\delta t$. La période $\delta t$ est programmable dans le serveur SRA typiquement entre une seconde et une minute.

A l'étape suivante P1, il est supposé que pendant la période $\delta t$, un indicateur de charge du centre de renseignement CRL constitué par l'attente prévisionnelle A a déjà été déterminé, comme cela sera décrit en détail plus loin dans la description. L'attente prévisionnelle A pour un centre de renseignement CR est égale au produit du nombre d'appels parqués $Np+1$, c'est-à-dire du nombre d'appels mis en attente dans le centre de renseignement, y compris l'appel en cours de traitement, par une estimation du temps moyen entre deux décrochages successifs d'opérateur dans le centre de renseignement. Ainsi, l'attente prévisionnelle A est la prévision de la durée qu'attendrait un appel de renseignement avant d'être servi par un opérateur du centre de renseignement si l'appel était renvoyé vers ce centre de renseignement.

Comme indiqué par des étapes parallèles PN2 et PD2 succédant à l'étape P1, le centre de renseignement local CRL est caractérisé par une capacité nominale CN et une capacité de débordement CD. La capacité nominale CN représente la capacité du centre de renseignement CRL à absorber son propre trafic local afin de déterminer si ce trafic local doit être traité par le centre de renseignement lui-même CRL ou bien doit être acheminé vers un autre centre de renseignement sélectionné dans la liste associée LCR. La capacité de débordement CD est la capacité du centre de renseignement à absorber du trafic téléphonique extérieur provenant des autres centres de renseignement auxquels sont associées des listes incluant le centre de renseignement local CRL, afin de déterminer si le trafic de débordement en provenance des autres centres de renseignement peut être traité par le centre de renseignement local CRL.

Chacune des capacités nominales CN et de débordement CD présente trois états, un état disponible $CN_1$, $CD_1$, un état en attente $CN_2$, $CD_2$, et un état saturé $CN_3$, $CD_3$. L'état de chaque capacité CN, CD est déterminé en fonction de l'attente prévisionnelle A et de deux seuils respectifs, $AN_1$ et $AN_2$ pour la capacité nominale CN, et $AD_1$ et $AD_2$ pour la capacité de débordement CD.

En référence à la partie de gauche de l'algorithme de la figure 2, on décrit d'abord la détermination de l'état de la capacité nominale CN pendant une période de $\delta t$. Au début du cycle de période $\delta t$, il est supposé à l'étape PN2 que la capacité nominale du centre CRL est à l'état $CN_i$, avec i = 1, 2 ou 3, l'état $CN_i$ correspondant à la variable A compris entre deux seuils $AN_{i-1}$ et $AN_i$, avec $AN_0$ = 0 et $AN_3$ égal à un grand nombre représentant l'infini.

Aux étapes suivantes PN3, PN4 et PN5, la variable A est comparée au seuil bas $AN_1$ et au seuil haut $AN_2$ qui déterminent les trois états de la capacité nominale :

- si $A < AN_1$, alors l'état de la capacité nominale est $CN_1$ (étape PN6), ce qui signifie que le centre de renseignement CRL est disponible pour traiter les appels de renseignement locaux ;
- si $AN_1 < A < AN_2$, alors la capacité nominale est à l'état $CN_2$ (étape PN7), et le centre de renseignement met en attente les appels de renseignement qu'il reçoit ;
- si $A > AN_2$, la capacité nominale est à l'état $CN_3$ (étape PN8) indiquant que le centre de renseignement CRL est saturé par les appels et n'est pas capable de les traiter tous.

Selon une première réalisation, l'état de la capacité nominale est changé dès que la variable A a franchi l'un des seuils $AN_1$ et $AN_2$. Ainsi si la variable A est inférieure à $AN_{i-1}$, l'état de la capacité passe à l'état inférieur $CN_{i-1}$, et si la variable A a franchi le seuil supérieur à $AN_i$, l'état de la capacité nominale passe à l'état supérieur $CN_{i+1}$.

En fonction de l'état CN de la capacité nominale déterminée ci-dessus, qui peut être l'état disponible $CN_1$, l'état en attente $CN_2$ ou l'état saturé $CN_3$, comme indiqué aux étapes PN6, PN7 et PN8, le serveur de répartition d'appels SRA détermine le routage des appels normalement à acheminer vers le centre de renseignement CRL.

Si l'état CN est l'état disponible $CN_1$, c'est-à-dire si la variable A est inférieure au premier seuil $AN_1$, l'attente pour un appel est trop faible pour être significative. Le serveur SRA dirige tous les appels vers le centre de renseignement local CRL qui traite son trafic local, même si d'autres centres de renseignement CR présentent des attentes prévisionnelles A qui sont inférieures à celle du centre CRL (étape PN9).

Si l'état CN est l'état en attente $CN_2$, c'est-à-dire si la variable A est comprise entre le seuil bas $CN_1$ et le seuil haut $CN_2$, le serveur SRA dirige le trafic local destiné initialement au centre de renseignement CRL vers un autre centre de renseignement CR à condition que ce dernier soit à l'état disponible $CD_1$ pour sa capacité de débordement (étape PN10). Le serveur SRA parcourt cycliquement la liste de centres de renseignement LCR pour trouver un centre de renseignement disponible dans cette liste. Si à l'étape PN10, aucun autre centre de renseignement dans la liste LCR n'est disponible pour recevoir le trafic du centre CRL, le trafic local est alors dirigé vers le centre de renseignement CRL lui-même (étape PN9).

Si l'état CN de la capacité nominale est l'état saturé $CN_3$ à l'étape PN8, c'est-à-dire si la variable A est supérieure au seuil $AN_2$, le serveur SRA recherche à l'étape PN11 si un autre centre de renseignement CR dans la liste associée LCR présente une capacité de débordement à l'état disponible $CD_1$ ou à l'état en attente $CD_2$ pour pouvoir absorber le trafic destiné normalement au centre de renseignement CRL. Pour choisir l'autre centre de renseignement disponible ou en attente, le serveur SRA sélectionne celui qui présente l'attente moyenne prévisionnelle A la plus petite. Ainsi, l'autre centre de renseignement vers lequel les appels du centre CRL sont dirigés est en priorité un centre avec une capacité de débordement à l'état disponible, et s'il n'en existe pas, un centre avec une capacité de débordement à l'état en attente.

Si à l'étape PN11, le serveur SRA ne trouve aucun autre centre de renseignement dont la capacité de débordement est à l'état disponible ou à l'état en attente dans la liste LCR, c'est-à-dire si tous les autres centres de renseignement ont leur capacité de débordement à l'état saturé $CD_3$ (étape PN12), le serveur SRA décide, selon une première variante, de diriger malgré cela les appels vers le centre de renseignement CRL qui seront mis alors en attente (étape PN9), ou bien selon une deuxième variante de rejeter les appels.

Après les étapes PN9, PN10 et PN11, le procédé de répartition d'appels revient à l'étape P0.

Comme montré à droite dans la figure 2, des étapes PD2 à PD11 déterminent l'état $CD_i$ de la capacité de débordement du centre de renseignement local CRL par rapport à des seuils $AD_{i-1}$ et $AD_i$ de l'attente prévisionnelle A, c'est-à-dire par rapport à un seuil bas $AD_1$ et un seuil haut $AD_2$, de manière analogue aux étapes PN2 à PN11, en changeant la lettre N par la lettre D dans les repères.

Si l'état CD de la capacité de débordement est l'état disponible $CD_1$ (étape PD6), c'est-à-dire si la variable A est inférieure au seuil bas $AD_1$, le serveur SRA marque le centre de renseignement local CRL pour qu'il accepte du trafic provenant d'autres centres de renseignement CR dont les capacités nominales sont à l'état d'attente $CN_2$ ou à l'état saturé $CN_3$ (étape P9).

Si la capacité de débordement CD du centre de renseignement CRL est à l'état en attente $CD_2$ (étape PD7), c'est-à-dire si la variable A est comprise entre le seuil bas $AD_1$ et le seuil haut $AD_2$, le centre CRL refuse le trafic de tout autre centre de renseignement CR sauf si ce dernier présente une capacité nominale à l'état saturé $CN_3$ (étape PD10).

Lorsque la capacité de débordement CD du centre CRL est à l'état saturé $CD_3$ (étape PD8), le serveur SRA refuse de diriger des appels provenant d'autres centres de renseignement CR vers le centre de renseignement CRL (étape PD11).

Après les étapes PD9, PD10 et PD11, comme après les étapes PN9, PN10 et PN11, le procédé retourne à l'étape P1 pour un nouveau cycle d'une période $\delta t$.

Dans la figure 2, les seuils $AN_1$ et $AN_2$ pour la capacité nominale sont a priori différents des seuils $AD_1$ et $AD_2$ pour la capacité de débordement. Toutefois, afin de simplifier l'algorithme, il est prévu en variante que les seuils $AN_1$ et $AD_1$ soient égaux et les seuils $AN_2$ et $AD_2$ soient égaux ; dans cette variante, les capacités nominales et de débordement CN et CD sont confondues et ainsi les étapes PN2 à PN11 sont respectivement fusionnées avec les étapes PD2 à PD11.

Dans la réalisation précédente montrée à la figure 2, la variable d'attente prévisionnelle A fait changer l'état de l'une des capacités nominale et de débordement CN et CD, dès que la variable A franchit l'un des seuils $AN_1$, $AN_2$, $AD_1$ et $AD_2$ ; par exemple, l'une des capacités peut passer directement de l'état disponible à l'état saturé et inversement. Un tel changement d'état rapide est ainsi perturbant pour l'exploitation d'autant plus que la période $\delta t$ est petite, de l'ordre de la seconde.

La deuxième réalisation montrée à la figure 3 remédie à cet inconvénient en filtrant par "hystérésis" le franchissement de chaque seuil $AN_1$, $AN_2$, $AD_1$ et $AD_2$, ce qui impose une inertie au changement d'état. Ce filtrage évite ainsi que chaque centre de renseignement change d'état à chaque période $\delta t$.

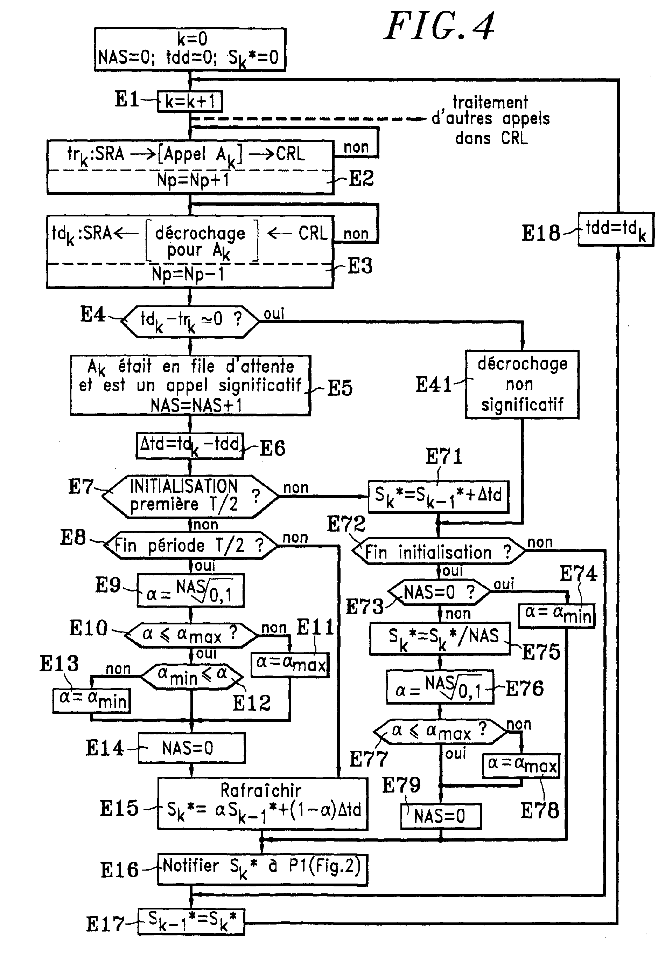

Cette deuxième réalisation est décrite en référence à la figure 4 pour ce qui concerne le franchissement des seuils $AN_1$ et $AN_2$ relatifs à la capacité nominale CN entre les couples d'étapes PN3-PN6 à PN5-PN8 et les étapes PN9 à PN11, le filtrage par "hystérésis" relatif à la capacité de débordement CD étant analogue à celui montré à la figure 4 en changeant la lettre N dans les repères par la lettre D.

L'état de capacité nominale CN(t) pour la période de cycle en cours à l'instant t est comparée à l'état de capacité nominale CN(t-$\delta t$) pour la période précédente à l'étape PN13 succédant aux étapes PN6, PN7 et PN8. Si ces états de capacité nominale CN(t) et CN(t-$\delta t$) sont identiques, il n'y a pas de changement d'état comme indiqué à l'étape PN14, et le procédé se poursuit par les étapes PN9 à PN11 selon que l'état CN(t) est l'état disponible $CN_1$, l'état en attente $CN_2$ ou l'état saturé $CN_3$ à vérifier à des étapes respectives PN15, PN16 et PN17.

Par contre à l'étape PN13, si les états successifs CN(t-$\delta t$) et CN(t) sont différents, l'étape PN18 ou PN19 vérifie si l'état CN(t) pour la période en cours est inférieur ou supérieur à l'état précédent CN(t-$\delta t$). Si l'un des seuils $AN_1$ et $AN_2$ a été franchi en descendant de l'état $CN_2$, $CN_3$ à l'état $CN_1$, $CN_2$, le compte c d'un compteur initialement mis à zéro et associé au centre CRL est décrémenté d'une unité (étape PN20) et l'état CN n'est pas modifié (étape PN14) tant que le compte c est supérieur à une limite minimale -cm (étape PN21, non) . Par contre, dès que le compte c atteint la limite minimale -cm, l'état CN(t) de la capacité nominale passe à l'état inférieur $CN_1$, $CN_2$ (étape PN22) et le compte c est remis à zéro.

Réciproquement, si l'un des seuils $AN_1$ et $AN_2$ a été franchi en montant de l'état $CN_1$, $CN_2$ à l'état $CN_2$, $CN_3$, le compte c du compteur est incrémenté d'une unité (étape PN23). Tant que le compte c n'a pas atteint une limite maximale +cm (étape PN24, non), l'état CN(t) de la capacité nominale n'est pas modifié (étape PN14). Par contre, dès que le compte c atteint la limite maximale cm, l'état CN(t) de la capacité nominale passe à l'état supérieur $CN_2$, $CN_3$ (étape PN22) et le compte c est remis à zéro.

Après les étapes PN14 et PN22, le procédé continue par les étapes PN15, PN16 et PN17.

Grâce à ce filtrage par "hystérésis" selon la figure 4, des transitions de l'état disponible vers l'état saturé ou de l'état saturé vers l'état disponible de chacune des capacités CN, CD ne sont plus possibles : le passage par l'état en attente est systématique. Puisque le compte c est remis à zéro à chaque changement d'état (étape PN22), il faut au moins cm comparaisons pour changer d'état. L'état de charge de chaque centre de renseignement CRL étant déterminé toutes les périodes $\delta t$, ceci implique qu'il y a au moins cm.$\delta t$ secondes entre deux changements d'état de capacité successifs. Le filtrage selon cette deuxième réalisation garantit ainsi une stabilité minimale à l'état des centres de renseignement.

Une valeur élevée de la limite cm, par exemple cm.$\delta t$=45 s, facilite l'exploitation puisque l'état des centres de renseignement en devient plus stable.

Le choix de la limite cm relève ainsi d'un compromis à faire en exploitation entre les performances et la stabilité.

Comme déjà dit à l'étape P1 (figure 2), l'attente prévisionnelle A est fonction du nombre d'appels parqués Np, c'est-à-dire mis en file d'attente dans le centre de renseignement CRL, et d'une estimation du temps moyen de traitement d'un appel S* entre deux décrochages d'opérateurs dans le centre CR, soit A = (Np+1) S*.

La formule précédente pour déterminer l'attente prévisionnelle A a été déduite de la réflexion suivante.

Si l'on considère un centre de renseignement CRL comportant NOP opérateurs pour lesquels la durée de conversation moyenne pour une demande de renseignement est H, un appel de renseignement attend en moyenne H/NOP secondes avant d'être servi par un opérateur dans le centre CRL s'il est envoyé vers ce centre par le serveur SRA. Cette attente moyenne perçue par l'usager est notée S.

Si à un instant donné la file d'attente des appels dans le centre de renseignement CRL comporte Np appels, avec Np > 0, alors un appel arrivant dans la file doit attendre

$$(Np+1)H/NOP = (Np+1)S \text{ seconde,}$$

avant d'être servi par un opérateur du centre CRL. Cette attente moyenne constitue la charge d'appels réels du centre CRL.

Cependant, le serveur SRA méconnaît le nombre d'opérateurs NOP dans chaque centre de renseignement, ainsi que la durée moyenne de conversation H. La durée d'attente moyenne S perçue par l'usager n'est donc pas connue par le serveur SRA.

L'attente moyenne S est estimée selon l'invention. L'attente moyenne estimée est dénotée S*, et est déterminée selon l'algorithme de la figure 4 décrit plus loin. L'attente prévisionnelle A est déterminée à l'étape P1 de la façon suivante :

Si Np $\neq$ 0     alors     A = (Np+1)S*
Si Np = 0     alors     A = 0.

Comme cela apparaît par l'incrémentation d'un indice k à une première étape E1 dans l'algorithme de la figure 4, les variables Np et S* sont mises à jour à chaque appel courant $A_k$, alors que l'attente prévisionnelle A est mise à jour toutes les périodes $\delta t$.

Dans le cas où Np = 0, c'est-à-dire dans le cas où la file d'attente dans le centre de renseignement CRL est vide, il est supposé qu'au moins un opérateur est libre, et donc l'attente prévisionnelle est nulle.

Pour tenir à jour les deux variables Np et S*, le serveur de répartition d'appels SRA connaît pour chaque appel, d'une part, l'instant de réception $tr_k$ d'un appel $A_k$ mis en file d'attente, puisque le serveur signale cette réception d'appel au centre de renseignement CRL, comme indiqué à une étape E2 à la figure 4, et d'autre part, l'instant $td_k$ de la fin de la mise en attente de l'appel $A_k$ signalé par un message de décrochage d'opérateur, ou bien de raccrochage ou de libération, transmis par le centre CRL au serveur SRA, comme indiqué à une étape E3 à la figure 4. Ainsi, à chaque arrivée d'un appel, le nombre Np est incrémenté d'une unité (étape E2) et à chaque décrochage d'un opérateur le nombre Np est décrémenté d'une unité (étape E3). Le nombre Np est ainsi connu par le serveur SRA.

La valeur estimée S* de l'attente moyenne S à partir de la moyenne des différences de temps entre deux décrochages successifs est déterminée de la manière suivante selon l'invention.

Lorsque la file d'attente dans le centre de renseignement CRL n'est pas vide, la durée séparant deux décrochages successifs $\Delta td$, c'est-à-dire comme indiqué à l'étape E6 dans la figure 4, la différence entre le temps $td_k$ où un opérateur a décroché en réponse à l'appel $A_k$ qui a été mis en attente, et le temps tdd du dernier décrochage effectué par un opérateur dans le centre de renseignement, est bien représentative de la capacité du centre CRL à traiter l'appel. Par contre, si la file d'attente d'appel dans le centre CRL est vide, un appel qui arrive au centre CRL est servi immédiatement, sans attente. La durée entre ce décrochage pour appel sans attente et le dernier décrochage n'est plus représentatif de la capacité du centre CRL, mais dépend de l'instant d'arrivée $td_k$ de l'appel courant $A_k$.

Pour cette raison, l'invention considère qu'un instant de décrochage est "significatif" lorsque l'opérateur prend un appel $A_k$ qui a attendu dans la file d'attente. Ainsi, comme indiqué à une étape E4 dans la figure 4, lorsque la différence entre le temps $td_k$ du décrochage de l'appel $A_k$ et le temps de réception $tr_k$ de cet appel est quasiment nulle, c'est-à-dire lorsque l'appel $A_k$ est servi quasiment immédiatement, le décrochage est considéré comme non significatif (étape E41) et la valeur estimée courante de l'attente moyenne $S_k$* n'est pas rafraîchie, l'algorithme de la figure 4 passant de l'étape E4 à une étape E17.

Comme indiqué à une étape E5 succédant à l'étape E4, à chaque décrochage significatif, c'est-à-dire après chaque mise en attente d'un appel $A_k$, pour lequel la durée d'attente $td_k$ - $tr_k$ est différente de zéro, le serveur SRA incrémente d'une unité un nombre NAS d'appels significatifs et calcule une nouvelle valeur estimée S* de l'attente moyenne S dans les étapes suivantes.

La valeur estimée $S_k$* pour l'appel courant $A_k$

est déterminée par pondération de la dernière valeur estimée $S_{k-1}^*$ et de la différence de temps $\Delta td$ entre l'instant de décrochage $td_k$ de l'appel courant significatif $A_k$ et l'instant du dernier décrochage tdd, qu'il soit ou non significatif comme déterminé à une étape E6 succédant à l'étape E5, selon la formule suivante

$$S_k^* = \alpha\, S_{k-1}^* + (1-\alpha)\, \Delta td.$$

$\Delta td$ est ainsi un tirage d'une variable aléatoire dont la moyenne vaut par définition S, et $\alpha$ dénote un facteur de lissage compris entre des limites minimale et maximale prédéterminées inférieures à 1.

Si le facteur $\alpha$ est proche de 1, le dernier échantillon de différence de décrochage $\Delta td$ n'est pas important dans l'estimation. La valeur estimée $S_k^*$ est donc très stable et ne varie pas brusquement en cas de pointe de trafic. Elle est lissée. Cependant elle nécessite un grand nombre d'échantillons pour varier.

Inversement, lorsque le facteur de lissage $\alpha$ diminue, la valeur estimée $S_k^*$ est moins lissée et donc plus réactive. Le nombre d'échantillons $\Delta td$ nécessaire pour faire varier la valeur de $S_k^*$ est moins élevé. Par contre, la valeur estimée $S_k^*$ est moins stable et plus sensible aux variations de trafic.

Comme indiqué à une étape E7 succédant à l'étape E6, l'algorithme prédictif montré à la figure 4 comprend une période d'initialisation de durée T/2, typiquement de 15 mn, qui pour chaque appel $A_k$ comprend des étapes E71 à E78. Pendant cette période d'initialisation, la première valeur estimée de l'attente moyenne $S_k^*$ est déterminée moyennant tous les échantillons de différence de temps de décrochage $\Delta td$ pendant la durée T/2, comme indiqué aux étapes E71 et E75 :

$$S_k^* = \frac{1}{NAS} \sum_{k=1}^{k=NAS} \Delta t_d$$

Ainsi, la première estimation est effectuée au fur et à mesure des décrochés d'appels significatifs pendant la première durée T/2. A la fin de l'initialisation à l'étape E72, la première valeur du facteur de lissage $\alpha$ est également déterminée. Si pendant l'initialisation, il n'y a eu aucun appel significatif soit NAS=0, la valeur estimée $S_k^*$ de l'attente moyenne est égale à zéro (passage de l'étape E4 à l'étape E72 à travers l'étape E41), et le facteur de lissage $\alpha$ est mis à une limite minimale $\alpha_{min}$ typiquement égale à 0,8 comme indiqué aux étapes E73 et E74. Par contre lorsqu'il y a au moins un appel significatif pendant l'initialisation (étape E73, non), le facteur de lissage $\alpha$ est calculé selon une formule détaillée ci-après à l'étape E76 dans la mesure où cette formule ne donne pas un facteur de lissage supérieur à une limite maximale $\alpha_{max}$ comme indiqué à l'étape E77. Dans le cas contraire à l'étape E78, la valeur du facteur de lissage est mise égale à la limite $\alpha_{max}$, typiquement égale à 0,95. Finalement, le nombre d'appels significatifs NAS est mis à zéro pour la deuxième période T/2 à l'étape E79.

Les valeurs $S_k^*$ et $\alpha$ ainsi déterminées aux étapes E74 à E78 initient l'algorithme de prédiction de la figure 4 pour déterminer à chaque appel significatif la valeur estimée de l'attente moyenne $S_k^*$ et mettre à jour la valeur du facteur de lissage $\alpha$ à chaque période T/2 comme cela est expliqué ci-dessous.

Le choix du facteur de lissage $\alpha$ découle des contraintes suivantes, pour obtenir une bonne estimation de l'attente moyenne S :

- l'erreur d'estimation doit être faible, c'est-à-dire l'estimation doit être stable ;
- l'algorithme prédictif doit être assez réactif pour prendre en compte des variations brutales d'effectifs d'opérateurs dans le centre de renseignement CRL, et donc des variations brutales de l'attente moyenne S, pendant un temps raisonnable.

Pendant la période de jour, notamment pendant les heures pleines, lorsque le nombre d'opérateurs des centres de renseignement CR est assez élevé et le trafic est suffisamment important pour que les files d'attente des centres de renseignement ne soient pas vides, l'acquisition d'un grand nombre d'échantillons $\Delta td$ se fait sur une durée très courte. Le facteur de lissage $\alpha$ peut être alors choisi proche de 1. Bien que le lissage soit fort, le nombre élevé d'échantillons $\Delta td$ permet une mise à jour assez rapide de la valeur estimée d'attente moyenne $S^*$. Le lissage élevé assure ainsi une estimation fiable, de faible variance, où les pics de bruit sont bien amortis.

Par contre pour de petits centres de renseignement CR, ou pendant des périodes creuses, tel que pendant la nuit ou pendant les heures de repas, le nombre d'opérateurs est assez restreint et un tel centre de renseignement reçoit un trafic faible, typiquement de l'ordre de 100 appels au plus par heure environ. L'acquisition d'une centaine d'échantillons $\Delta td$ peut prendre alors jusqu'à une heure. L'invention diminue alors le nombre d'échantillons dans le calcul de la valeur estimée $S^*$ afin d'augmenter la réactivité de l'algorithme de prédiction, ce qui revient à diminuer le facteur de lissage $\alpha$. L'algorithme de prédiction conserve une réactivité suffisante bien que la valeur estimée $S^*$ soit beaucoup moins stable.

Le facteur de lissage $\alpha$ est déterminé en supposant que si l'on observe une impulsion $\Delta td = 1$, suivi de n échantillons $\Delta td$ nuls, alors la réponse $S_n^*$ à cette impulsion est déduite par la récurrence de la formule de la valeur estimée :

$S_1^* = (1-\alpha)$
$S_2^* = \alpha \, S_1^*$
$S_n^* = \alpha^n \cdot S_1^*$ , soit :
$S_n^* = \alpha^n \, (1-\alpha)$ avec $0 < \alpha < 1$.

La figure 5 représente la variation $\alpha^n = S_n^*/(1-\alpha)$ en fonction de l'indice n.

Si $N_{oubli}$ dénote le nombre d'échantillons de $\Delta td$ nécessaire pour que la réponse impulsionnelle soit inférieure à 1%, $N_{oubli}$ représente la durée pendant laquelle le poids de l'échantillon est encore significatif dans le calcul de l'estimation. Cette durée varie en fonction de $\alpha$ ; si $\alpha$ est proche de 1, $N_{oubli}$ est grand, et plus $\alpha$ diminue, plus $N_{oubli}$ diminue.

Soit T le temps nécessaire pour acquérir $N_{oubli}$ échantillons $\Delta td$. Pour que l'algorithme prédictif soit assez réactif, l'invention impose que la valeur estimée S* soit complètement rafraîchie en T minutes maximum. La durée T est paramétrable dans le serveur SRA et est choisie typiquement égale à 30 mn.

Pour déterminer la valeur du facteur de lissage $\alpha$, le nombre d'échantillons NAS pendant les T/2 dernières minutes est compté, et n = 2.NAS échantillons $\Delta td$ sont supposés reçus pendant les T minutes suivantes. En accord avec une réponse impulsionnelle inférieure à 1% comme indiqué ci-dessus, la relation entre $\alpha$ et NAS est : $\alpha^{2.NAS} = 0{,}01$, soit

$$\alpha = {}^{NAS}\!\sqrt{0{,}1}$$

Ainsi, comme indiqué dans la partie inférieure E8 à E15 de gauche de la figure 4, à chaque fin de période T/2 à l'étape E8, la valeur du facteur de lissage $\alpha$ est déterminée selon la formule précédente (étape E9). Puis la valeur $\alpha$ déterminée est comparée à une limite supérieure $\alpha_{max}$, typiquement égale à 0,95 (étape E10), et à une limite inférieure $\alpha_{min}$, typiquement égale à 0,8 (étape E11) et de manière à maintenir le facteur de lissage $\alpha$ compris entre $\alpha_{min}$ et $\alpha_{max}$. Sinon, la valeur de $\alpha$ est remplacée par la limite maximale $\alpha_{max}$ (étape E12) ou la limite minimale $\alpha_{min}$ (étape E13). Puis le nombre d'appels significatifs NAS est remis à zéro pour la prochaine période T/2 (étape E14).

Ensuite la valeur estimée de l'attente moyenne $S_k^*$ est rafraîchie en la déterminant selon la formule précitée à l'étape E15, et notifiée à l'étape P1 de l'algorithme de répartition d'appel (figure 2), à l'étape E16, afin de déterminer l'attente prévisionnelle A selon l'invention. Finalement la variable $S_{k-1}^*$ est mise égale à la variable $S_k^*$ (étape E17) et la variable de temps du dernier décrochage tdd est mise égale à $td_k$ (étape E18).

En variante, afin d'alléger la charge de travail du serveur SRA, la valeur de l'attente moyenne estimée $S_k^*$ est rafraîchie à la fin de chaque période T/2, en même temps que la détermination du facteur de lissage $\alpha$ ; la liaison "non" entre les étapes E8 et E15 dans la figure 4 est remplacée par une liaison "non" entre les étapes E8 et E18, et l'étape E6 mémorise l'échantillon de différence de temps $\Delta td$ seulement pour l'appel significatif à la fin de la période T/2 à l'étape E8.

Selon encore une autre variante, la plupart des étapes de l'algorithme prédictif de la figure 4 peuvent être incrémentées dans le centre de renseignement en question CRL afin qu'il transmette après chaque décrochage pour un appel significatif, non pas l'instant de décrochage $td_k$ à l'étape E3, mais la valeur rafraîchie de l'attente moyenne estimée $S_k^*$ à l'étape E15 de manière à la notifier à l'étape P1 de l'algorithme de la figure 2 mis en oeuvre dans le serveur SRA.

Bien que la description précédente se réfère à des centres de renseignement CR pour terminaux d'usager téléphoniques fixes "TU", l'invention est également applicable dans le réseau fixe d'un réseau de radiotéléphonie de terminaux d'usager téléphoniques mobiles. Dans la figure 1, pour ce contexte dans un réseau de radiotéléphonie, TU désigne un terminal radiotéléphonique mobile, CA1 désigne un commutateur du service mobile MSC, CT désigne le réseau de signalisation propre au réseau de radiotéléphonie, et SRA et CR désignent un serveur de répartition d'appels selon l'invention pour terminaux d'usager radiotéléphoniques et des centres de renseignement locaux pour le réseau de radiotéléphonie. Les centres de renseignement CR sont alors accessibles par exemple en composant les numéros d'appel de renseignement 512 ou 712 pour la France.

## Revendications

1. Procédé pour répartir des appels vers des centres de renseignement téléphoniques, **caractérisé par** un cycle d'étapes suivantes pour un centre de renseignement donné (CRL) :

   - déterminer (P1) une attente prévisionnelle (A) des appels en fonction du nombre d'appels en attente (Np) et d'une attente moyenne estimée (S*) par appel dans le centre donné,
   - router (PN9) les appels vers le centre donné (CRL) lorsque l'attente prévisionnelle déterminée est inférieure à un premier seuil ($AN_1$), et accepter (PD9) des appels d'autres centres de renseignement (CR) dont les attentes prévisionnelles sont supérieures au premier seuil, lorsque l'attente prévisionnelle déterminée est inférieure à un troisième seuil ($AD_1$),
   - router (PN10) les appels destinés au centre donné vers un autre centre de renseignement (CR) à condition que l'attente prévisionnelle de celui-ci soit inférieure au troisième seuil, lorsque l'attente prévisionnelle déterminée (A) est comprise entre le premier seuil et un deuxième seuil ($AN_2$) supérieur au premier seuil, et n'accepter (PD10) des appels d'un autre centre de renseignement (CR) que si l'attente prévisionnelle de celui-ci est supérieure au deuxième seuil, lorsque l'attente prévisionnelle déterminée est comprise entre le troisième seuil et un quatrième seuil ($AD_2$) supérieur au troisième seuil, et

- router (PN11) des appels destinés au centre donné (CRL) vers un autre centre de renseignement (CR) dont l'attente prévisionnelle est inférieure au quatrième seuil, lorsque l'attente prévisionnelle déterminée est supérieure au deuxième seuil, et refuser (PD11) tout appel d'autres centres de renseignement lorsque l'attente prévisionnelle déterminée est supérieure au quatrième seuil.

2. Procédé conforme à la revendication 1, selon lequel chaque centre de renseignement (CR) vers lequel des appels du centre donné (CRL) sont routés, est sélectionné dans une liste prédéterminée (LCR) de centres de renseignement attribuée au centre donné.

3. Procédé conforme à la revendication 2, selon lequel, lorsque ledit chaque centre de renseignement (CR) a une attente prévisionnelle inférieure au troisième seuil ($AD_1$), celui-ci est trouvé parmi les centres de renseignement disponibles en parcourant cycliquement ladite liste prédéterminée (LCR).

4. Procédé conforme à la revendication 2, selon lequel, lorsque ledit chaque centre de renseignement (CR) a une attente prévisionnelle inférieure au quatrième seuil ($AD_2$), celui-ci présente la plus petite attente prévisionnelle de la liste (LCR).

5. Procédé conforme à l'une quelconque des revendications 1 à 4, selon lequel les premier et troisième seuils ($AN_1$, $AD_1$) sont égaux, et les deuxième et quatrième seuils ($AN_2$, $AD_2$) sont égaux.

6. Procédé conforme à l'une quelconque des revendications 1 à 5, selon lequel le franchissement de chaque seuil ($AN_1$, $AN_2$, $AD_1$, $AD_2$) selon un sens donné par l'attente prévisionnelle déterminée (A) au cours du cycle incrémente (PN18-PN20 ; PN19-PN23) un compte (c), et l'étape de router ou d'accepter ou de refuser dépendant de ce seuil n'est exécutée que dès que le compte atteint (PN22) un nombre prédéterminé (cm) pendant des cycles précédant ledit cycle.

7. Procédé conforme à l'une quelconque des revendications 1 à 6, selon lequel l'attente prévisionnelle des appels (A) est égale au produit (Np+1)$S_k$*, Np dénotant le nombre d'appels mis en attente dans le centre de renseignement donné (CRL) qui est incrémenté d'une unité en réponse à chaque appel ($A_k$) dirigé vers le centre donné (E2) et qui est décrémenté en réponse à un décrochage (E3) pour cet appel dans le centre donné, et $S_k$* dénotant une attente moyenne estimée entre deux décrochages dans le centre donné (CRL).

8. Procédé conforme à la revendication 7, selon lequel l'attente moyenne estimée $S_k$* est rafraîchie (E13) en réponse au décrochage pour chaque appel significatif ($A_k$) en file d'attente (E5) dans le centre donné (CRL) selon la relation suivante :

$$S_k* = \alpha\, S_{k-1}* + (1-\alpha)\Delta td,$$

$S_{k-1}$* dénotant l'attente moyenne estimée pour un appel significatif précédant, $\alpha$ un facteur de lissage, et $\Delta td$ une différence entre l'instant du décrochage pour l'appel significatif ($A_k$) et l'instant du décrochage de l'appel précédant, qu'il ait été mis en attente ou non.

9. Procédé conforme à la revendication 8, selon lequel le facteur de lissage ($\alpha$) est déterminé (E9) en fonction du nombre d'appels significatifs NAS par période prédéterminée, selon la formule :

$$\alpha = NAS\sqrt{0,1}$$

10. Procédé conforme à la revendication 9, selon lequel le facteur de lissage ($\alpha$) est compris entre une limite minimale et une limite maximale inférieures à 1, de préférence la limite minimale étant égale à 0,8 et la limite maximale étant égale à 0,95.

11. Procédé conforme à la revendication 9 ou 10, selon lequel, lors d'une première période d'initialisation (E7), l'attente moyenne estimée $S_k$* est égale à la moyenne des différences de temps de décrochage (E75) pendant la période d'initialisation.

12. Système de gestion des appels vers des centres de renseignement téléphoniques (CRL, CR), **caractérisé en ce qu'**il comprend un serveur (SRA) relié à des moyens de commutation téléphonique (CA1, CA2, CA3) desservant les centres de renseignement (CRL, CR) pour recevoir de ceux-ci des signaux de traitement d'appels, et concentrer la gestion du routage des appels vers les centres conformément au procédé selon l'une quelconque des revendications 1 à 11.

*FIG.1*

*FIG.5*

$$\alpha^n = S_n*/(1-\alpha)$$

*FIG.2*

Toutes les périodes ôt effectuer — PO

P1 — Déterminer
si Np ≠ 0   A = (Np+1)S*
si Np = 0   A = 0

$\left\{\begin{array}{l} Np \\ S^* = S^*_k \\ de\ E16 \\ FIG.4 \end{array}\right.$

Capacité nominale CN — PN2

Capacité de débordement CD — PD2

PD3 — A < AD$_1$   non

A < AN$_1$   non

PN3   oui

PN4

AN$_1$ ⩽ A < AN$_2$   non

PD4

oui

AD$_1$ ⩽ A < AD$_2$   non

PN6

PN5

AN$_2$ ⩽ A

PD6

PD5

AD$_2$ ⩽ A

CN = CN$_1$ disponible

CD = CD$_1$ disponible

CN = CN$_2$ en attente

PD2

PN8

CD = CD$_2$ en attente

PN7

PD9

PD8

CN = CN$_3$ saturé

CD = CD$_3$ saturé

PN9

Router appels vers CRL

Accepter trafic de CR avec CN$_2$ ou CN$_3$

non   PN10

Sélectionner CR avec CD$_1$ dans LCR

PD10

Accepter trafic de CR seulement avec CN$_3$

oui

PN11

oui

Sélectionner CR avec CD$_1$ ou CD$_2$ et A la plus petite dans LCR

PD11

Refuser trafic de tout CR

non

PN12 — Tous les CD dans LCR saturés

vers PO

vers PO

rejeter appels

EP 1 185 065 A2

*FIG.3*

$A \leqslant AN_1$ —PN3

$AN_1 \leqslant A \leqslant AN$ —PN4

$An_2 \leqslant A$ —PN5

$CN(t) = CN_1$ —PN6

$CN(t) = CN_2$ —PN7

$CN(t) = CN_3$ —PN8

$CN(t) = CN(t-\delta t)$ ? —PN13    non

oui

PN18

$CN(t-\delta t)=CN_2>CN_1=CN(t)$
ou
$CN(t-\delta t)=CN_3>(CN_2$ ou $CN_1)=CN(t)$

non

PN19

$CN(t-\delta t)=CN_1<(CN_2$ ou $CN_3)=CN(t)$
ou
$CN(t-\delta t)=CN_2<CN_3=CN(t)$

oui

$c = c-1$ —PN20

$c = c+1$ —PN23

non    $c = -cm$ ? —PN21

non    $c = cm$ ? —PN24

oui

oui

$CN(t) \equiv CN(t-\delta t)$ —PN14

Changement d'état
$c \equiv 0$ —PN22

PN15

$CN(t) = CN_1$ disponible ? —  non

PN16    $CN(t) = CN_2$ en attente ? — non

PN17

$CN(t) = CN_3$ saturé

oui

oui

oui

PN9

PN10

PN11

*FIG.4*

$k=0$
$NAS=0$; $tdd=0$; $S_k{}^*=0$

E1 — $k=k+1$

traitement d'autres appels dans CRL

$tr_k{:}SRA \rightarrow [Appel\ A_k] \rightarrow CRL$ — non
$Np=Np+1$ — E2

$td_k{:}SRA \leftarrow \begin{bmatrix} décrochage \\ pour\ A_k \end{bmatrix} \leftarrow CRL$ — non
$Np=Np-1$ — E3

E18 — $tdd=td_k$

E4 — $td_k-tr_k \simeq 0$ ? — oui

$A_k$ était en file d'attente et est un appel significatif — E5
$NAS=NAS+1$

E41 — décrochage non significatif

$\Delta td=td_k-tdd$ — E6

E7 — INITIALISATION première T/2 ? — non

E71 — $S_k{}^*=S_{k-1}{}^*+\Delta td$

E8 — Fin période T/2 ? — non

E72 — Fin initialisation ? — non

E9 — $\alpha=\sqrt[NAS]{0,1}$

E73 — NAS=0 ? — oui — E74 — $\alpha=\alpha_{min}$

E10 — $\alpha \leqslant \alpha_{max}$ ? — non — E11 — $\alpha=\alpha_{max}$

non

$S_k{}^*=S_k{}^*/NAS$ — E75

E13 — non — E12 — $\alpha_{min} \leqslant \alpha$
$\alpha=\alpha_{min}$

$\alpha=\sqrt[NAS]{0,1}$ — E76

E14 — NAS=0

E77 — $\alpha \leqslant \alpha_{max}$ ? — non — $\alpha=\alpha_{max}$ — E78
oui

Rafraîchir
E15 — $S_k{}^*=\alpha S_{k-1}{}^*+(1-\alpha)\Delta td$

E79 — NAS=0

E16 — Notifier $S_k{}^*$ à P1(Fig.2)

E17 — $S_{k-1}{}^*=S_k{}^*$